# NEUE EUROPÄISCHE PATENTSCHRIFT

(11) **EP 1 067 053 B2**
(45) Veröffentlichungstag und Bekanntmachung des Hinweises auf die Entscheidung über den Einspruch: **11.03.2009**
(45) Hinweis auf die Patenterteilung: 20.11.2002
(21) Anmeldenummer: 00106908.7
(22) Anmeldetag: 31.03.2000
(51) Int. Cl.: B65C 9/42, B65H 7/12

(54) **Vorrichtung zur Detektion von Objekten**
Device for detecting an object
Dispositif pour la détection d'objets

(30) Priorität: 07.05.1999 DE 19921217; 18.06.1999 DE 19927865
(43) Veröffentlichungstag der Anmeldung: 10.01.2001
(73) Patentinhaber: Leuze electronic GmbH + Co., 73277 Owen/Teck (DE)
(72) Erfinder: Priebsch, Hans-Dieter, 73266 Bissingen (DE)
(74) Vertreter: Ruckh, Rainer Gerhard

(56) Entgegenhaltungen:
- EP-A- 0 265 634
- DE-A- 2 936 737
- DE-A- 3 620 042
- DE-A- 3 620 042
- DE-A- 3 713 758
- DE-A- 4 446 367
- DE-A- 19 628 849
- DE-C- 3 146 477
- DE-C- 3 235 660
- DE-C- 32 030 208
- JP-A- 55 072 880
- JP-A- 56 090 215
- JP-A- 62 070 707
- US-A- 4 066 969
- US-A- 4 066 969
- US-A- 4 164 143
- US-A- 4 366 712
- US-A- 4 368 438
- US-A- 4 368 438
- US-A- 4 975 889
- US-A- 5 005 192
- US-A- 5 348 286
- US-A- 5 458 728
- US-B1- 6 212 130
- PROF. DR. CHRISTIAN GERTHSEN: 'PHYSIK/ ein Lehrbuch zum gebrauch neben Vorlesungen', 1949, VOLK UND WISSEN VERLAG GMBH, LEIPZIG

## Beschreibung

Die Erfindung betrifft eine Vorrichtung zur Detektion von Objekten, welche von Etiketten auf einem Trägermaterial, gebildet sind. Eine solche Vorrichtung ist aus US 4 066 969 A bekannt.

Eine andere Vorrichtung ist aus der DE-PS 195 21 129 bekannt. Diese Vorrichtung umfasst einen kapazitiven Sensor mit zwei Kondensatorelementen, die in Abstand nebeneinanderliegend einer Kondensatorplatte gegenüberstehen. Das Trägermaterial mit den Etiketten wird im Luftspalt zwischen der Kondensatorplatte und den Kondensatorelementen geführt.

Zur Detektion der Etiketten auf dem Trägermaterial ist jedem Kondensatorelement ein eine Pulsfolge erzeugendes Zeitglied und ein Tiefpass nachgeschaltet, wobei die Ausgänge der Tiefpässe auf die Eingänge eines Differenzverstärkers geführt sind.

Mit dieser Schaltungsanordnung sind Etiketten auf dem Trägermaterial detektierbar, und zwar selbst dann wenn die Etiketten und das Trägermaterial aus transparenten Materialien bestehen.

Nachteilig hierbei ist jedoch, dass derartige Vorrichtungen äußerst empfindlich gegen Temperatureinflüsse und insbesondere gegen Feuchtigkeit sind. Desweiteren ist die Detektion von metallisierten Materialien problematisch.

Zudem können mit den beiden Kondensatorelementen lediglich die Signalflanken erfasst werden, welche bei der Detektion einer Etikettenkante auftreten.

Voraussetzung hierfür ist, dass die Etiketten mit dem Trägermaterial mit einer vorgegebenen Geschwindigkeit an den Kondensatorelementen vorbeibewegt werden. Eine statische Detektion bei ruhendem Trägermaterial ist nicht möglich. Zudem ist nachteilig, dass eine Etikettendetektion nur dann sicher möglich ist, wenn die Etikettenkanten längs einer Geraden quer zur Transportrichtung des Trägermaterials verlaufen, so dass über die Breite der Etiketten jeweils ein zumindest näherungsweise konstanter Abstand benachbarter Etiketten vorliegt.

Der Erfindung liegt die Aufgabe zugrunde, eine Vorrichtung der eingangs genannten Art so auszubilden, dass eine sichere Detektion von Etiketten auf Trägermaterialien für ein möglichst breites Spektrum von Materialien gewährleistet ist.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Die erfindungsgemäße Vorrichtung wird gemäß der Erfindung, wie in Anspruch 1 angegeben, zur Detektion von Etiketten auf einem Trägermaterial eingesetzt und weist einen Ultraschallwellen emittierender Sender und einen Ultraschallwellen empfangender Empfänger auf. Dabei wird das Trägermaterial mit den Etiketten im Zwischenraum zwischen Sender und Empfänger geführt. Je nachdem, ob zwischen Sender und Empfänger das Trägermaterial alleine oder eine auf dem Trägermaterial aufgebrachte Etikette von den Ultraschallwellen erfasst wird, werden die Ultraschallwellen in unterschiedlicher Weise abgeschwächt. Die entsprechenden Unterschiede des Empfangssignals am Ausgang des Empfängers werden dadurch erfasst, in dem das Empfangssignal mit einem Schwellwert verglichen wird. Dieser Schwellwert ist an die auftretenden Pegel der Empfangssignale durch einen Abgleichvorgang, welcher mittels einer Teach-in-Taste auslösbar ist, angepasst. Bei dem vor der Detektion der Etiketten durchgeführten Abgleichvorgang wird die Höhe des Schwellwerts bei zwischen Sender und Empfänger angeordnetem Trägermaterial und / oder einer dort angeordneten Etikette in Abhängigkeit des dabei registrierten Empfangssignals selbsttätig bestimmt.

Mittels der Ultraschallwellen sind Etiketten auf dem Trägermaterial nahezu unabhängig von deren Materialbeschaffenheit detektierbar. Insbesondere können Etiketten auf Trägermaterialien erkannt werden, selbst wenn diese aus transparenten Materialien bestehen oder wenn diese metallisierte Oberflächen aufweisen. Zudem sind mit der erfindungsgemäßen Vorrichtung selbst sehr dünne Etiketten sicher detektierbar. Besonders vorteilhaft dabei ist, dass die erfindungsgemäße Vorrichtung unempfindlich gegen Umgebungseinflüsse, wie zum Beispiel Feuchtigkeit oder Temperaturschwankungen ist.

Weiterhin ist vorteilhaft, dass mit der erfindungsgemäßen Vorrichtung die gesamte Fläche der Etiketten erkannt wird und nicht nur deren Kanten. Dies führt dazu, dass Etiketten mit nahezu beliebigen Randkonturen erfassbar sind.

Ein wesentlicher Vorteil der erfindungsgemäßen Vorrichtung besteht zudem darin, dass durch die Frequenzmodulation der Ultraschallwellen verhindert wird, dass sich zwischen Sender und Empfänger stehende Wellen der Ultraschallwellen ausbilden, so dass die Messwerte verfälschende Interferenzerscheinungen vermieden werden.

Die Erfindung wird im nachstehenden anhand der Zeichnungen erläutert. Es zeigen:
- Figur 1:: Querschnitt durch die in einem Gehäuse integrierte erfindungsgemäße Vorrichtung.
- Figur 2:: Erstes Ausführungsbeispiel einer Auswerteschaltung für die Vorrichtung gemäß Figur 1.
- Figur 3:: Zweites Ausführungsbeispiel einer Auswerteschaltung für die Vorrichtung gemäß Figur 2.

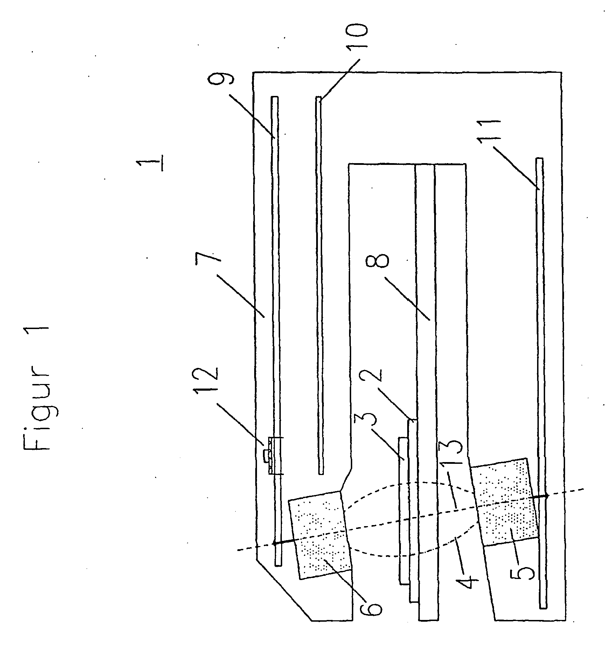

Figur 1 zeigt den Aufbau einer Vorrichtung 1 zur Detektion von auf einem Trägermaterial 2 aufgebrachten Etiketten 3.

Die Vorrichtung 1 weist einen Ultraschallwellen 4 emittierenden Sender 5 und einen Ultraschallwellen 4 empfangenden Empfänger 6 auf, die in einem Gehäuse 7 untergebracht sind. Das Gehäuse 7 ist gabelförmig aufgebaut, wobei die beiden Arme der Gabel parallel verlaufend in Abstand zueinander verlaufen. Der Sender 5 und der Empfänger 6 sind jeweils in einem Arm der Gabel gegenüberliegend angeordnet. Im Zwischenraum zwischen den Gabeln wird das bandförmige Trägermaterial 2 mit den darauf aufgesetzten Etiketten 3 in Längsrichtung transportiert. Dabei liegt das Trägermaterial 2 auf einem Auflagestab 8 im Zwischenraum zwischen den Armen der Gabel auf und wird quer zum Auflagestab 8 über eine nicht dargestellte Antriebsvorrichtung gefördert. Der Sender 5 und der Empfänger 6 sind oberhalb und unterhalb des Trägermaterials 2 angeordnet, so dass die vom Sender 5 emittierten Ultraschallwellen 4 das Trägermaterial 2 und gegebenenfalls die Etiketten 3 durchsetzen und zum Empfänger 6 gelangen.

Die Etiketten 3 sind dabei auf dem Trägermaterial 2 in Längsrichtung hintereinander in vorgegebenen Abständen zueinander aufgebracht.

Der Sender 5 und der Empfänger 6 sind an eine Auswerteschaltung angeschlossen, die auf mehreren Leiterplatten 9, 10 ,11 im Inneren des Gehäuses 7 integriert sind. An eine der Leiterplatten 9 ist zudem eine von der Außenseite des Gehäuses 7 betätigbare Teach-in Taste 12 angeschlossen.

Zur Detektion der Etiketten 3 auf dem Trägermaterial 2 wird die durch die Etiketten 3 bewirkte Abschwächung der Ultraschallwellen 4, die auf den Empfänger 6 auftreffen, ausgewertet. Hierzu wird das Empfangssignal am Ausgang des Empfängers 6 mit einem Schwellwert S1 verglichen. Dieser Schwellwert S1 wird vor der eigentlichen Detektion der Etiketten 3 in einem Abgleichvorgang ermittelt. Während des Abgleichvorgangs wird das Empfangssignal bei zwischen Sender 5 und Empfänger 6 befindlichem Trägermaterial 2 registriert und daraus die Höhe des Schwellwerts S1 bestimmt. Prinzipiell ist auch ein Abgleich denkbar, bei welchem das Empfangssignal ausgewertet wird, wenn eine Etikette 3 mit oder ohne Trägermaterial 2 zwischen Sender 5 und Empfänger 6 angeordnet ist.

Der Sender 5 emittiert längs einer Strahlachse gerichtete Ultraschallwellen 4, die typischerweise im Frequenzbereich zwischen 200 KHz und 400 KHz liegen. Der Empfänger 6 liegt dabei in der Strahlachse 13 der Ultraschallwellen 4.

Das Trägermaterial 2 mit den Etiketten 3 liegt horizontal im Zwischenraum zwischen den Armen des gabelförmigen Gehäuses 7. Bei einer Anordnung des Senders 5 und Empfängers 6 in Richtung der Oberflächennormalen des Trägermaterials 2 bestünde die Gefahr, dass sich stehende Ultraschallwellen 4 zwischen Sender 5 und Empfänger 6 bilden könnten, was zur Bildung von Interferenzen führen würde. Dies würde die Detektion der Etiketten 3 beeinträchtigen.

Um derartige Interferenzen der Ultraschallwellen 4 zu vermeiden sind der Sender 5 und der Empfänger 6 schräg im Gehäuses 7 angeordnet, so dass die Strahlachse 13 der Ultraschallwellen 4, in einem vorgegebenen Winkel α geneigt zur Oberflächennormalen des Trägermaterials 2 verläuft. Im vorliegenden Ausführungsbeispiel liegt dieser Winkel α etwa im Bereich 5° ≤ α ≤ 10°. Dadurch werden durch Interferenzen bedingte Minima und Maxima der Ultraschallwellen 4 teilweise ausgemittelt.

Zur vollständigen Unterdrückung der Interferenzen der Ultraschallwellen 4 wird der Sender 5 mit einer vorgegebenen Modulationsfrequenz υ im Bereich vom 2 KHz ≤ υ ≤ 5 KHz frequenzmoduliert.

Ohne diese Frequenzmodulation könnten Interferenzen der Ultraschallwellen 4 auch dadurch unterdrückt werden, dass der Neigungswinkel α größer, etwa im Bereich von 40°, gewählt wird.

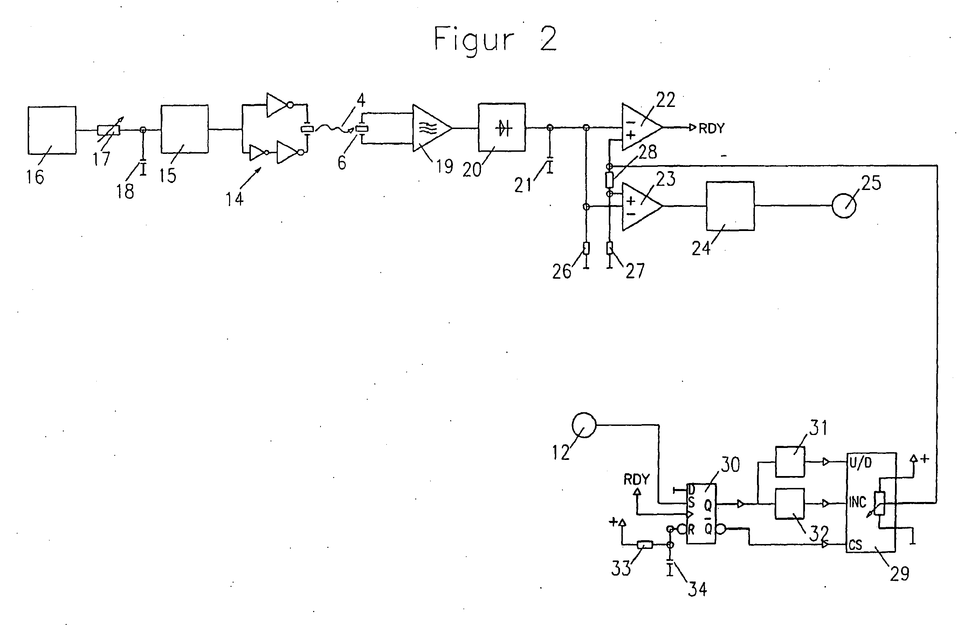

Figur 2 zeigt ein erstes Ausführungsbeispiel der Auswerteschaltung. Der als Ultraschallgeber ausgebildete Sender 5 ist an eine Ausgangstreiberschaltung 14 mit mehreren Invertern und an einen Oszillator 15 angeschlossen. Der Oszillator 15 stößt den Ultraschallgeber resonant zur Abgabe von Ultraschallwellen 4 an, deren Frequenzen vorzugsweise im Bereich zwischen 200 KHz und 400 KHz liegen. Über die Ausgangstreiberschaltung 14 wird die hierfür erforderliche Leistung zur Verfügung gestellt.

Die Ultraschallwellen 4 werden mittels eines Impulsgenerators 16, welcher über eine einstellbaren Widerstand 17 und einen Kondensator 18 an den Oszillator 15 angeschlossen ist, mit der Modulationsfrequenz υ frequenzmoduliert.

Die auf den Empfänger 6 auftreffenden Ultraschallwellen 4 generieren an dessen Ausgang ein Empfangssignal, welches einem Bandpassfilter 19 und einem Demodulator 20 zugeführt wird, an dessen Ausgang ein Kondensator 21 geschaltet ist.

Das gefilterte und demodulierte Empfangssignal ist auf einen Eingang eines ersten Komparators 22 geführt. Zudem ist das Empfangssignal auf einen Eingang eines zweiten Komparators 23 geführt, dessen Ausgang über eine Pufferschaltung 24 auf einen Schaltausgang 25 geführt ist.

An der Eingangsseite der Komparatoren 22, 23 sind mehrere Widerstände 26, 27, 28 geschaltet, wobei einer der Widerstände 28 in einer Zuleitung, die jeweils einen Eingang der Komparatoren 22, 23 verbindet, geschaltet ist und als Spannungsteiler wirkt,

Zur Durchführung des Abgleichvorgangs der Vorrichtung 1 ist ein E²-Potentiometer 29 vorgesehen, welches über ein Flip-Flop 30 steuerbar ist. Der Ausgang Q des Flip-Flops 30 ist über ein Zeitglied 31 auf den Eingang U/D des E²-Potentiometers 29 und über einen Impulsgenerator 32 auf einen weiteren Eingang INC des E²-Potentiometers 29 geführt. Der Ausgang Q des Flip-Flops 30 ist auf einen Eingang CS des E²-Potentiometers 29 geführt.

An einen Eingang R des Flip-Flops 30 sind ein Widerstand 33 und ein Kondensator 34 angeschlossen. An einen weiteren Eingang D ist die Teach-in Taste 12 angeschlossen.

Schließlich ist das Ausgangssignal RDY am ersten Komparator 22 auf einen weiteren Eingang des Flip-Flops 30 geführt.

Der Ausgang des E²-Potentiometers 29 ist auf den zweiten Eingang des ersten Komparators 22 geführt.

Der Abgleichvorgang der Vorrichtung 1 wird durch Betätigen der Teach-in Taste 12 ausgelöst. Dabei wird im vorliegenden Ausführungsbeispiel der Abgleichvorgang bei zwischen Sender 5 und Empfänger 6 stationär angeordnetem Trägermaterials 2 durchgeführt. Hierzu kann beispielsweise eine Etikette 3 vom Trägermaterials 2 entfernt werden, wobei dieses Stück des Trägermaterials 2 in den Zwischenraum zwischen Sender 5 und Empfänger 6 gehalten wird.

Durch Betätigen der Teach-in Taste 12 wird über das Flip-Flop 30 und das Zeitglied 31 das E²-Potentiometer 29 auf seinen Anfangswert zurückgesetzt. Über den Impulsgenerator 32 wird dann der Eingang INC des E²-Potentiometers 29 aktiviert, wodurch der Widerstand des E²-Potentiometers 29 schrittweise erhöht wird und damit auch die Spannung am Eingang des ersten Komparators 22 schrittweise erhöht, bis diese gleich dem Spannungswert des Empfangssignals am anderen Eingang des Komparators ist. Sobald die Eingangsspannungen an den Eingängen des Komparators 22 gleich groß sind, erfolgt am Ausgang des Komparators 22 ein Signalwechsel, der auf das Flip-Flop 30 rückgekoppelt ist. Dadurch wird die Inkrementierung im E²-Potentiometer 29 angehalten und der so eingestellte Spannungswert am Eingang des Komparators 22 als Referenzspannung übernommen. Diese Referenzspannung wird über den als Spannungsteiler wirkenden Widerstand 28 auf einen Wert von etwa der Hälfte der Referenzspannung geteilt und liegt an einem Eingang des zweiten Komparators 23 an. Dieser Spannungswert bildet die Höhe des Schwellwerts S1, mit welchem nach Beendigung des Abgleichvorgangs während der Betriebsphase der erfindungsgemäßen Vorrichtung 1 das Empfangssignal fortlaufend verglichen wird. Je nachdem, ob das Empfangssignal oberhalb oder unterhalb des Schwellwerts S1 liegt, ergibt sich am Schaltausgang 25 ein bestimmter Schaltzustand. Dabei entspricht das oberhalb des Schwellwerts S1 liegende Empfangssignals und der entsprechende Schaltzustand am Schaltausgang 25 der Detektion des Trägermaterials 2. Liegt das Empfangssignal unterhalb des Schwellwerts S1, so entspricht dies der Detektion einer Etikette 3 auf dem Trägermaterial 2 mit dem entsprechenden Schaltzustand am Schaltausgang 25.

Da der Schwellwert S1 durch einen Abgleich des Empfangssignals bei zwischen Sender 5 und Empfänger 6 angeordnetem Trägermaterial 2 erfolgt, ist die Höhe des Schwellwerts S1 optimal an die Pegelverhältnisse der Empfangssignale während der nachfolgenden Betriebsphase angepasst.

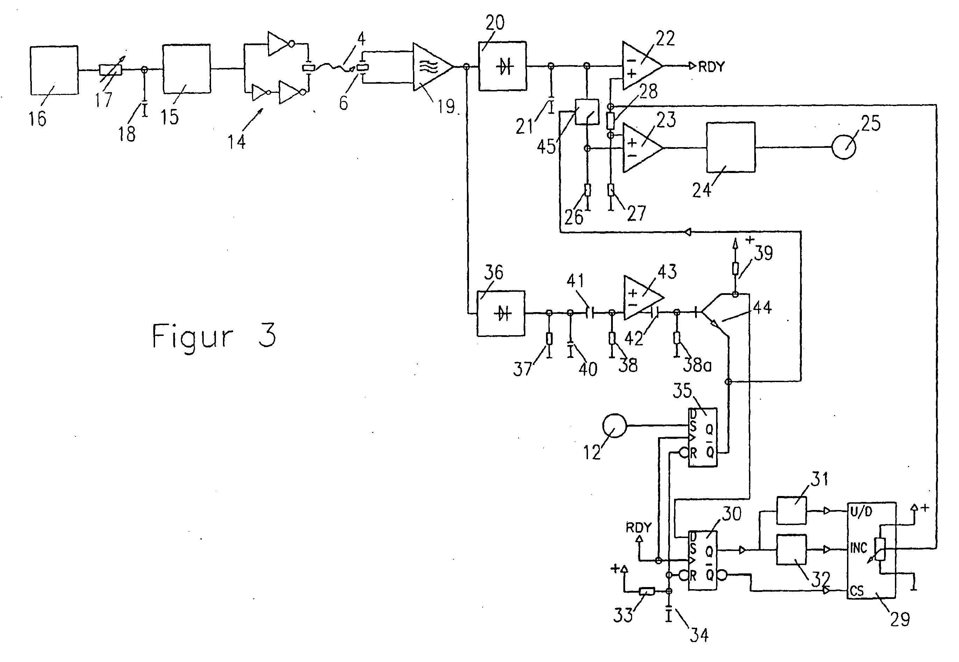

Figur 3 zeigt ein zweites Ausführungsbeispiel der Auswerteschaltung für die erfindungsgemäße Vorrichtung 1.

Dabei entspricht diese Auswerteschaltung in wesentlichen Teilen der Auswerteschaltung gemäß Figur 2. Insbesondere ist die Beschaltung des Senders 5 identisch zum Ausführungsbeispiel gemäß Figur 2. Desweiteren ist analog zum Ausführungsbeispiel gemäß Figur 2 zur Durchführung des Abgleichvorgangs das Flip-Flop 30 vorgesehen, welches über das Zeitglied 31 und den Impulsgenerator 32 an das E²-Potentiometer 29 angeschlossen ist, dessen Ausgang auf den ersten Komparator 22 geführt ist. Zudem ist wiederum das Ausgangssignal RDY des ersten Komparators 22 auf einen Eingang des Flip-Flops 30 geführt.

Ebenso wird entsprechend dem Ausführungsbeispiel gemäß Figur 2 über den Spannungsteiler die Referenzspannung am ersten Komparator 22 auf etwa die Hälfte geteilt und als Schwellwert S1 an einen Eingang des zweiten Komparators 23 angelegt, der zur Erkennung der Etiketten 3 dient und dessen Ausgang auf den Schaltausgang 25 geführt ist.

Im Unterschied zur Auswerteschaltung gemäß Figur 2 ist bei der Schaltungsanordnung gemäß Figur 3 die Teach-in Taste 12 auf einen Eingang S eines zweiten Flip-Flops 35 geführt.

Zudem wird im Unterschied zur Auswerteschaltung gemäß Figur 2 das Empfangssignal am Ausgang des Bandpassfilters 19 nicht nur dem ersten Demodulator 20 sondern auch einem zweiten Demodulator 36 zugeführt. Am Ausgang des zweiten Demodulators 36 sind mehrere Widerstände 37 - 39 und Kondensatoren 40 - 42 sowie ein dritter Komparator 43 und schließlich ein Transistor 44 geschaltet.

Der Emitter des Transistors 44 ist auf den Ausgang Q des zweiten Flip-Flops 35 geschaltet. Der Kollektor des Transistors 44 ist auf den Eingang S des ersten Flip-Flops 30 geführt. Zudem führt vom Emitter des Transistors 44 eine Zuleitung zu einem Analogschalter 45, der mit jeweils einem Eingang des ersten und zweiten Komparators 22, 23 verbunden ist.

Mit diesen zusätzlichen Schaltungselementen wird ein dynamischer Abgleichvorgang ermöglicht, während dessen des Trägermaterial 2 mit den Etiketten 3 durch den Zwischenraum zwischen Sender 5 und Empfänger 6 hindurchbewegt wird. Dabei stellen die Schaltungselemente einen Spitzenwertdetektor dar, mit welchem ein Abgleich auf den Wert des Empfangssignals erfolgt, der bei Detektion des Trägermaterials 2 ohne Etiketten 3 erhalten wird.

Die Etiketten 3 sind jeweils in vorgegebenen Abständen zueinander auf dem Trägermaterial 2 in dessen Längsrichtung hintereinander aufgebracht. Wird ein Etikett 3 mittels der Ultraschallwellen 4 abgetastet, so werden diese relativ stark abgeschwächt, so dass dementsprechend die Amplitude des Empfangssignals am Ausgang des Empfängers 6 relativ klein ist. Sind die Ultraschallwellen 4 auf das Trägermaterial 2 im Zwischenraum zwischen zwei Etiketten 3 gerichtet, so steigt das Empfangssignal kurzfristig an. Die Breite des so erhaltenen Peaks im Empfangssignal ist abhängig von der Breite des Zwischenraums und der Geschwindigkeit mit welcher das Trägermaterial 2 am Sender 5 und Empfänger 6 vorbeibewegt wird.

Mit dem Spitzenwertdetektor wird die Höhe des Peaks des Empfangssignals detektiert und gespeichert. Dabei werden durch Betätigen der Teach-in Taste 12 die Schaltungselemente des Spitzenwertdetektors über das zweite Flip-Flop 35 aktiviert.

Durch Betätigen der Teach-in Taste 12 wird das zweite Flip-Flop 35 gesetzt, wodurch der Emitter des Transistors 44 auf Masse geschaltet wird. Das demodulierte Empfangssignal am Ausgang des zweiten Demodulators 36 wird über eine vom Kondensator 41 gebildete dynamisierte Kopplung dem dritten Komparator 43 zugeführt.

Mit diesem Komparator 43 wird die Breite des Peaks des Empfangssignal erfasst. Dabei wechselt der Ausgang des dritten Komparators 43 mit Beginn des Signalpeaks vom Signalwert "high" auf den Signalwert "low" und wird bei Ende des Peaks des Empfangssignals auf den Signalwert "high" zurückgesetzt. Somit gibt die Dauer, über welche am Ausgang des dritten Komparators 43 der Signalwert "low" ansteht, ein direktes Maß für die Breite des Peaks des Empfangssignals und damit für die Breite der Lücke zwischen zwei Etiketten 3 auf dem Trägermaterial 2.

Durch das Setzen des Flip-Flops 35 wird gleichzeitig über dessen Ausgang Q der Analogschalter 45 geöffnet. Dadurch kann sich der Kondensator 21 am Ausgang des ersten Demodulators 20 auf den Spitzenwert des Empfangssignals an dessen Ausgang aufladen und diesen Wert halten. Durch den Signalwechsel am Ausgang des dritten Komparators 43 am Ende des Signalpeaks des Empfangssignals entsteht ein Impuls am Kollektor des Transistors 44, der den Abgleichvorgang über das E²-Potentiometer 29 analog zum Ausführungsbeispiel gemäß Figur 2 in Gang setzt. Da im Kondensator 21 am Ausgang des ersten Demodulators 20 der Spitzenwert des Empfangssignals gespeichert ist, ist gewährleistet, dass der Abgleich auf diesen Spitzenwert erfolgt. Dabei erfolgt der Abgleichvorgang und die Generierung des Schwellwerts S1 analog zum Ausführungsbeispiel gemäß Figur 2.

### Bezugszeichenliste

- (1): Vorrichtung
- (2): Trägermaterial
- (3): Etikett
- (4): Ultraschallwelle
- (5): Sender
- (6): Empfänger
- (7): Gehäuse
- (8): Auflagestab
- (9): Leiterplatte
- (10): Leiterplatte
- (11): Leiterplatte
- (12): Teach-in Taste
- (13): Strahlachse
- (14): Ausgangstreiberschaltung
- (15): Oszillator
- (16): Impulsgenerator
- (17): Widerstand
- (18): Kondensator
- (19): Bandpassfilter
- (20): Demodulator
- (21): Kondensator
- (22): Komparator
- (23): Komparator
- (24): Pufferschaltung
- (25): Schaltausgang
- (26): Widerstand
- (27): Widerstand
- (28): Widerstand
- (29): Potentiometer
- (30): Flip-Flop
- (31): Zeitglied
- (32): Impulsgenerator
- (33): Widerstand
- (34): Kondensator
- (35): Flip-Flop
- (36): Demodulator
- (37): Widerstand
- (38): Widerstand
- (39): Widerstand
- (40): Kondensator
- (41): Kondensator
- (42): Kondensator
- (43): Komparator
- (44): Transistor
- (45): Analogschalter

## Patentansprüche

1. Vorrichtung zur Detektion von Objekten mit einem Ultraschallwellen (4) emittierenden Sender (5) und einem Ultraschallwellen (4) empfangenden Empfänger (6), **dadurch gekennzeichnet, dass** die Objekte von auf einem Trägermaterial (2) aufgebrachten Etiketten gebildet sind, wobei das Trägermaterial (2) mit den Etiketten (3) zwischen Sender (5) und Empfänger (6) angeordnet ist, und wobei zur Detektion der Etiketten (3) das Empfangssignal am Ausgang des Empfänger (6) mit einem Schwellwert S1 verglichen wird, welcher während eines Abgleichvorgangs, welcher mittels einer Teach-in-Taste auslösbar ist, bei zwischen Sender (5) und Empfänger (6) angeordnetem Trägermaterial (2) und / oder dort angeordneter Etikette (3) in Abhängigkeit des dabei registrierten Empfangssignals selbsttätig bestimmbar ist, wobei während des Abgleichvorgangs das Trägermaterial (2) mit den Etiketten (3) zwischen Sender (5) und Empfänger (6) über ein Antriebsvorrichtung, wobei hindurch bewegt wird zur Bestimmung des bei Detektion des Trägermaterials (2) generierten Empfangssignals ein Spitzenwertdetektor vorgesehen ist, und wobei der Abgleich auf ein Empfangssignal erfolgt, welches bei der Detektion des Trägermaterials (2) ohne Etikette (3) generiert ist.

2. Vorrichtung nach Anspruch 1, **dadurch gekennzeichnet, dass** der Sender (5) längs einer Strahlachse (13) gerichtete Ultraschallwellen (4) im Frequenzbereich zwischen 200 KHz und 400 KHz emittiert.

3. Vorrichtung nach Anspruch 2, **dadurch gekennzeichnet, dass** die Ultraschallwellen (4) mit einer Modulationsfrequenz υ im Bereich von 2 KHz ≤ υ ≤ 5 KHz frequenzmoduliert sind.

4. Vorrichtung nach einem der Ansprüche 2 oder 3, **dadurch gekennzeichnet, dass** die Strahlachse der Ultraschallwellen (4) geneigt zur Oberflächennormalen der Objekte verläuft.

5. Vorrichtung nach Anspruch 4, **dadurch gekennzeichnet, dass** die Strahlachse der Ultraschallwellen (4) in einem Winkel α im Bereich 5° ≤ α ≤ 10° geneigt zur Oberflächennormalen der Objekte verläuft.

6. Vorrichtung nach einem der Ansprüche 1 - 5, **dadurch gekennzeichnet, dass** zur Durchführung des Abgleichvorgangs ein erster Komparator (22) vorgesehen ist, auf dessen ersten Eingang das Empfangssignal und auf dessen zweiten Eingang das Ausgangssignal eines E²-Potentiometers (29) geführt ist.

7. Vorrichtung nach Anspruch 6, **dadurch gekennzeichnet, dass** das dem ersten Komparator (22) zugeführte Empfangssignal in einem ersten Demodulator (20) demoduliert wird.

8. Vorrichtung nach einem der Ansprüche 6 oder 7, **dadurch gekennzeichnet, dass** die durch den Abgleich des Ausgangssignals des E²-Potentiometers (29) auf das Empfangssignal gewonnene Referenzspannung über einen Spannungsteiler geteilt und dem Eingang eines zweiten Komparators (23) zugeführt wird und den Schwellwert S1 zur Bewertung des Empfangssignals bildet.

9. Vorrichtung nach Anspruch 8, **dadurch gekennzeichnet, dass** am zweiten Eingang des zweiten Komparators (23) das demodulierte Empfangssignal ansteht.

10. Vorrichtung nach einem der Ansprüche 8 oder 9, **dadurch gekennzeichnet, dass** der Ausgang des zweiten Komparators (23) auf einen Schaltausgang (25) geführt ist.

11. Vorrichtung nach Anspruch 1, **dadurch gekennzeichnet, dass** der Spitzenwertdetektor durch Betätigen der Teach-in Taste (12) aktivierbar ist.

12. Vorrichtung nach einem der Ansprüche 1 oder 11, **dadurch gekennzeichnet, dass** der Spitzenwertdetektor einen dritten Komparator (43) aufweist, auf dessen Eingang über einen ersten Kondensator (41) das in einem zweiten Demodulator (36) demodulierte Empfangssignal eingekoppelt wird, sowie einen an den Ausgang des dritten Komparators (43) angeschlossenen Transistor (44), dessen Emitter an einen Flip-Flop (35) angeschlossen ist, wobei über den Ausgang Q des Flip Flops (35) ein Analogschalter (45) betätigbar ist, an dessen Ausgang ein zweiter Kondensator (21) geschaltet ist, welcher an den Ausgang des ersten Demodulators (20) angeschlossen ist und auf den am Ausgang dieses Demodulators (20) anstehenden Spitzenwert aufladbar ist, und dass über den an das Flip-Flop (30) angeschlossenen Kollektor des Transistors (44) der Abgleichvorgang aktivierbar ist.

13. Vorrichtung nach Anspruch 12, **dadurch gekennzeichnet, dass** über den Kollektor das Transistors (44) der mit dem E²-Potentiometer (29) durchgeführte Abgleichvorgang aktivierbar ist.

## Claims

1. Device for detecting objects by a transmitter (5) emitting ultrasound waves (4) and a receiver (6) receiving ultrasound waves (4), **characterised in that** the objects are formed by labels applied to a carrier material (2), wherein the carrier material (2) with the labels (3) is arranged between transmitter (5) and receiver (6) and wherein for detection of the labels (3) the received signal at the output of the receiver (6) is compared with a threshold value S1 which is automatically determinable during an adjusting process, which can be triggered by means of a teach-in-button, when carrier material (2) is arranged between transmitter (5) and receiver (6) and/or a label (3), which is arranged there, in dependence on the received signal then registered, wherein during the adjusting process the carrier material (2) with the labels (3) is moved through between transmitter (5) and receiver (6) by a drive device, wherein a peak value detector is provided for determination of the received signal generated on detection of the carrier material (2), and wherein the adjustment is carried out to a received signal which is generated on detection of the carrier material (2) without label (3).

2. Device according to claim 1, **characterised in that** the transmitter (5) emits ultrasound waves (4) directed along a beam axis (13) and in the frequency range between 200 KHz and 400 KHz.

3. Device according to claim 2, **characterised in that** the ultrasound waves (4) are frequency-modulated with a modulation frequency ν in the range of 2 KHz ≤ ν ≤ 5 KHz.

4. Device according to one of claims 2 and 3, **characterised in that** the beam axis of the ultrasound wave (4) extends at an inclination to the normals to the surface of the object.

5. Device according to claim 4, **characterised in that** the beam axis of the ultrasound waves (4) extends at an inclination to the normals of the surface of the objects at an angle α in the region of 5° ≤ α ≤ 10°.

6. Device according to one of claims 1 to 5, **characterised in that** a first comparator (22) is provided for carrying out the adjusting process, the received signal being applied to the first input of the comparator and the output signal of an E² potentiometer (29) being applied to the second input of the comparator.

7. Device according to claim 6, **characterised in that** the received signal fed to the first comparator (22) is demodulated in a first demodulator (20).

8. Device according to one of claims 6 and 7, **characterised in that** the reference voltage obtained by the adjusting of the output signal of the E² potentiometer (29) to the received signal is divided by way of the voltage divider and fed to the input of a second comparator (23) and forms the threshold value S1 for evaluation of the received signal.

9. Device according to claim 8, **characterised in that** the demodulated received signal is present at the second input of the second comparator (23).

10. Device according to one of claims 8 and 9, **characterised in that** the output of the second comparator (23) is applied to a switch output (25).

11. Device according to claim 1, **characterised in that** the peak value detector is activatable by actuation of the teach-in button (12).

12. Device according to one of claims 1 to 11, **characterised in that** the peak value detector comprises a third comparator (43) to the input of which the received signal demodulated in a second demodulator (36) is coupled by way of a first capacitor (41), and a transistor (44), the emitter of which is connected with a flip-flop (35), connected with the output of the third comparator (33), wherein an analog switch (45) is actuable by way of the output Q of the flip-flop (35) and is connected at its output with a second capacitor (21), which is connected with the output of the first demodulator (20) and chargeable to the peak value present at the output of this demodulator (20), and that the adjusting process is activatable by way of the collector, which is connected with the flip-flop (30), of the transistor (44).

13. Device according to claim 12, **characterised in that** the adjusting process carried out with the E² potentiometer (29) is activatable by way of the collector of the transistor (44).

## Revendications

1. Dispositif pour la détection d'objets comportant un émetteur (5) d'ondes ultrasonores (4) et un récepteur (6) d'ondes ultrasonores (4), **caractérisé par le fait que** les objets sont constitués d'étiquettes appliquées sur un matériau support (2), le matériau support (2) portant les étiquettes (3) étant disposé entre l'émetteur (5) et le récepteur (6), dispositif dans lequel le signal de réception à la sortie du récepteur (6) est comparé pour la détection des étiquettes (3) avec une valeur seuil S1, laquelle peut être déterminée automatiquement en fonction du signal de réception enregistré pendant un processus d'égalisation qui peut être déclenché au moyen d'une touche d'apprentissage, le matériau support (2) étant disposé entre l'émetteur (5) et le récepteur (6) et / ou une étiquette (3) étant appliquée sur le matériau support, le matériau support (2) avec les étiquettes (3) étant en mouvement entre l'émetteur (5) et le récepteur (6) à l'aide d'un mécanisme de commande pendant le processus d'égalisation, un détecteur de valeur de crête étant prévu pour la détermination du signal de réception généré lors de la détection du matériau support (2), l'égalisation étant réalisée avec un signal de réception qui est généré lors de la détection du matériau support (2) sans étiquettes (3).

2. Dispositif selon la revendication 1, **caractérisé par le fait que** l'émetteur (5) émet des ondes ultrasonores (4) dirigées le long d'un axe de faisceau (13) dans une gamme de fréquences comprise entre 200 kHz et 400 kHz.

3. Dispositif selon la revendication 2, **caractérisé par le fait que** les ondes ultrasonores (4) sont modulées en fréquence par une fréquence de modulation υ dans la gamme 2 kHz ≤ υ ≤ 5 kHz.

4. Dispositif selon l'une des revendications 2 ou 3, **caractérisé par le fait que** l'axe de faisceau des ondes ultrasonores (4) est incliné par rapport à la normale à la surface des objets.

5. Dispositif selon la revendication 4, **caractérisé par le fait que** l'axe de faisceau des ondes ultrasonores (4) est incliné d'un angle α dans la gamme 5° ≤ α ≤ 10° par rapport à la normale à la surface des objets.

6. Dispositif selon l'une des revendications 1 à 5, **caractérisé par le fait qu'**il est prévu pour exécuter le processus d'égalisation un premier comparateur (22) à la première sortie duquel est amené le signal de réception et à la deuxième sortie duquel est amené le signal de sortie d'un potentiomètre E² (29).

7. Dispositif selon la revendication 6, **caractérisé par le fait que** le signal de réception amené au premier comparateur (22) est démodulé dans un premier démodulateur (20).

8. Dispositif selon l'une des revendications 6 ou 7, **caractérisé par le fait que** la tension de référence obtenue par l'égalisation du signal de sortie du potentiomètre E² (29) avec le signal de réception est divisée par un diviseur de tension et amenée à l'entrée d'un deuxième comparateur (23) et constitue la valeur seuil S1 pour l'évaluation du signal de réception.

9. Dispositif selon la revendication 8, **caractérisé par le fait que** le signal de réception démodulé est appliqué à la deuxième entrée du deuxième comparateur (23).

10. Dispositif selon l'une des revendications 8 ou 9, **caractérisé par le fait que** la sortie du deuxième comparateur (23) est amenée à une sortie logique (25).

11. Dispositif selon la revendication 1, **caractérisé par le fait que** le détecteur de valeur de crête est activable par une manoeuvre de la touche d'apprentissage (12).

12. Dispositif selon l'une des revendications 1 à 11, **caractérisé par le fait que** le détecteur de valeur de crête présente un troisième comparateur (43) à l'entrée duquel est appliqué via un premier condensateur (41) le signal de réception démodulé dans un deuxième démodulateur (36), ainsi qu'un transistor (44) relié à la sortie du troisième comparateur (43), dont l'émetteur est relié à une bascule (35) dont la sortie Q peut actionner un commutateur analogique (45) à la sortie duquel est branché un deuxième condensateur (21) lequel est relié à la sortie du premier démodulateur (20) et peut être chargé à la valeur de crête présente à la sortie de ce démodulateur (20), et **par le fait que** le processus d'égalisation peut être activé par l'intermédiaire du collecteur du transistor (44) relié à la bascule (30).

13. Dispositif selon la revendication 12, **caractérisé par le fait que** le processus d'égalisation effectué avec le potentiomètre E² (29) peut être activé par l'intermédiaire du collecteur du transistor (44).
